# EUROPÄISCHE PATENTANMELDUNG

(11) **EP 2 352 270 A2**
(43) Veröffentlichungstag der Anmeldung: **03.08.2011**
(21) Anmeldenummer: 10183807.6
(22) Anmeldetag: 19.06.2006
(51) Int. Cl.: H04L 29/06

(54) **Verfahren und Vorrichtung zur Übermittlung von Informationen von einem Informationsserver zu einem mobilen Endgerät und ein mobiles Endgerät**

(30) Priorität: 20.06.2005 DE 102005028496
(62) Teilanmeldung aus: 06012551.5
(71) Anmelder: Vodafone Holding GmbH, 40213 Düsseldorf (DE)
(72) Erfinder: Rodriques, Bruno, 40217, Düsseldorf (DE)
(74) Vertreter: Müller & Schubert

(57) **Zusammenfassung**

Die vorliegende Erfindung betrifft ein Verfahren zur Übermittlung von Informationen von einem Informationsserver über einen paketvermittelten Dienst eines Mobilfunknetzes zu einem mobilen Endgerät. Das Verfahren zeichnet sich dadurch aus, dass die Übermittlung zumindest zeitweise entsprechen einem IP-Protokoll erfolgt und das Verfahren zumindest den Schritt des Empfangs einer Anmeldungsanfrage an dem Informationsserver und Übermittlung von auf dem Informationsserver gespeicherten Informationen an das mobile Endgerät umfasst. Weiterhin werden ein Informationsserver, ein mobiles Endgerät und ein Kommunikationsprotokoll sowie ein Verfahren zur Verwaltung von Informationen auf einem mobilen Endgerät beschrieben.

## Beschreibung

Die vorliegende Erfindung betrifft ein Verfahren zur Übermittlung von Informationen von einem Informationsserver, Informationsserver, Kommunikationsprotokoll, mobiles Endgerät und Verfahren zur Verwaltung von Informationen

Zur Übermittlung von Informationen, wie Nachrichten, Angeboten oder Werbung ist es bekannt in Mobilfunknetzen Zellrundspruchnachrichten, die im Folgenden auch als Cell Broadcast Nachrichten bezeichnet werden, zu verwenden. Bei dieser Variante des Kurzmitteilungsdienstes SMS, wird eine Information an eine bestimmte Gruppe innerhalb eines regionalen Gebietes versendet. Das Gebiet, in dem die Nachrichten versandt werden sollen, kann durch den Anbieter der Informationen festgelegt werden. Nach der Festlegung erhalten alle mobilen Endgeräte des Kommunikationssystems in diesem Gebiet die ausgestrahlten Nachrichten.

Die Dienstleistung des Cell Broadcasts muss zum einen von dem Bearer, das heißt dem für die Übermittlung verwendeten Träger, als auch von dem Mobilfunknetzbetreiber und zum anderen von dem mobilen Endgerät unterstützt werden.

Diese Vorraussetzungen sind nicht ständig für alle Nutzer eines Kommunikationssystems gegeben, denen Informationen zukommen gelassen werden sollen.

Aus diesem Grund ist es eine Aufgabe der vorliegenden Erfindung eine regelmäßige Übermittlung von Informationen an mindestens ein mobiles Endgerät zu ermöglichen, die zuverlässig gewährleistet werden kann.

Der Erfindung liegt die Erkenntnis zugrunde, dass diese Aufgabe gelöst werden kann, indem eine alternative Übertragung der Informationen geschaffen wird, die mit bereits existierenden Übertragungsarten kompatibel ist und auf einfache Weise realisiert werden kann.

Die Aufgabe wird gemäß einem ersten Aspekt gelöst durch ein Verfahren zur Übermittlung von Informationen von einem Informationsserver über einen paketvermittelten Dienst eines Mobilfunknetzes zu einem mobilen Endgerät. Das Verfahren zeichnet sich dadurch aus, dass die Übermittlung zumindest zeitweise entsprechend einem IP-Protokoll erfolgt und das Verfahren zumindest den Schritt des Empfangs einer Anmeldungsanfrage an dem Informationsserver und Übermittlung von auf dem Informationsserver gespeicherten Informationen an das mobile Endgerät umfasst.

Durch die Anmeldung des mobilen Endgerätes an dem Informationsserver kann eine Verbindung, wie ein PDP-Context hergestellt werden, über den eine Übermittlung von Datenpaketen nach dem IP-Protokoll ermöglicht wird. Hierdurch wird somit eine zusätzliche Art der Übermittlung zu der bekannten Übermittlung mittels Cell-Broadcast geschaffen, die mit der Cell Broadcast-Übermittlung gleichzeitig oder aber auch alternativ genutzt werden kann.

Das Verfahren kann den Schritt des Extrahierens einer Angabe über die zuletzt auf dem mobilen Endgerät empfangene Information aus der Anmeldungsanfrage, des Vergleiches der zuletzt an dem mobilen Endgerät empfangenen Information mit den auf dem Informationsserver gespeicherten Informationen und der Übermittlung der nach der letzten auf dem mobilen Endgerät empfangenen Information gespeicherten Informationen an das mobile Endgerät umfassen. Durch diese Verfahrensschritte wird eine Aktualisierung der Informationen auf dem mobilen Endgerät ermöglicht, wenn dieses über eine gewisse Zeit keine Informationen von dem Informationsserver empfangen hat.

Zusätzlich kann das Verfahren den Schritt des Extrahierens mindestens einer Angabe von Informationskanälen aus der Anmeldeanfrage umfassen. Mittels dieser Angabe kann der Informationsserver entscheiden, welche Informationen an das mobile Endgerät zu übermitteln sind. Den Informationskanälen, die den Cell Broadcast Kanälen entsprechen, können Informationen unterschiedlicher Kategorien zugeordnet werden. So können beispielsweise einem Kanal Informationen betreffend Sport und einem anderen Kanal Informationen betreffend Kultur zugeordnet sein. Durch die Angabe für welche Kanäle Informationen an das mobile Endgerät zu übermitteln sind, kann der Überwachungs- und Übermittlungsaufwand zur ständigen Aktualisierung des mobilen Endgerätes vereinfacht werden, da die weiteren Kanäle hierbei außer acht gelassen werden können.

Das Verfahren kann den Schritt des Extrahierens einer Angabe über die zuletzt auf dem mobilen Endgerät empfangene Information in mindestens einem in der Anmeldeanfrage enthaltenen Informationskanäle, aus der Anmeldungsanfrage, des Vergleiches der in diesem Informationskanal zuletzt an dem mobilen Endgerät empfangenen Information mit den auf dem Informationsserver gespeicherten Informationen und der Übermittlung der nach der letzten auf dem mobilen Endgerät empfangenen Information in diesem Informationskanal gespeicherten Informationen an das mobile Endgerät umfassen. Die Angabe, die bezüglich der zuletzt auf dem mobilen Endgerät empfangenen Information aus der Anmeldeanfrage extrahiert wird, ist insbesondere der Empfangszeitpunkt dieser Information an dem mobilen Endgerät. Durch diese Angabe kann der Informationsserver den Aktualitätszustand der Informationen auf dem mobilen Endgerät überprüfen und fehlende Informationen erkennen. Diese können dann in einer Serie von Datenpaketen an das mobile Endgerät übermittelt werden.

Vorzugsweise umfasst das Verfahren den Schritt des Feststellen der Übermittlung aller der in dem Vergleich ermittelten Informationen, die auf dem Informationsserver gespeichert sind aber noch nicht an dem mobilen Endgerät empfangen wurden, an das mobile Endgerät, den Schritt des Erzeugens einer Endnachricht und der Übermittlung der Endnachricht an das mobile Endgerät. Durch diese Endnachricht, die den Inhalt besitzt, dass keine weiteren Nachrichten auf den Informationsserver vorhanden sind, wird dem Endgerät angezeigt, dass dieses auf dem aktuellen Stand ist und spätere empfangene Informationen entsprechend verarbeitet werden können.

Nach der Übermittlung der Endnachricht werden neue auf dem Informationsserver erzeugte Informationen an das mobile Endgerät übermittelt werden. Dies kann asynchron jeweils nach der Erzeugung einer jeden Nachricht erfolgen.

Das Verfahren kann weiterhin den Schritt des Empfangs einer Abmeldeanfrage von dem mobilen Endgerät und den Schritt des Abmeldens des mobilen Endgerätes umfassen. Durch die Abmeldung kann bis zur nächsten Anmeldung an dem Server keine weitere Übermittlung von Datenpaketen an das Endgerät nach dem IP-Protokoll erfolgen.

Das Verfahren kann weiterhin die Übermittlung von Informationen mittels Cell Broadcast an mindestens zwei mobile Endgeräte umfassen. Diese Übermittlungsart kann zu der Übermittlung über einen IP-Baerer gleichzeitig erfolgen. Somit können, wenn ein mobiles Endgerät Informationen über den IP-Baerer empfängt, weitere mobile Endgeräte weiterhin die Informationen in Form von Cell-Broadcast-Nachrichten empfangen.

Die Übermittlung der Informationen entsprechend dem IP-Protokoll erfolgt vorzugsweise mittels einer Point-to-Point-, einer Multicast- oder Broadcast-Übermittlung. Insbesondere bei einer Point-to-Point-Übermittlung kann die Push-Technik für die Übertragung verwendet werden und somit die Informationen unmittelbar auf das mobile Endgerät gebracht werden.

Gemäß einem weiteren Aspekt wird die Aufgabe gelöst durch einen Informationsserver für ein Mobilfunknetz, der sich dadurch auszeichnet, dass dieser zumindest eine Empfangseinheit aufweist, die zumindest für den Empfang von Anfragen, die gemäß einem IP-Protokoll übermittelt wurden, und zumindest eine Verarbeitungseinheit zur Verarbeitung der mindestens einen empfangenen Anfrage. Die Verarbeitungseinheit kann insbesondere eine Extraktionseinheit zum Extrahieren von Angaben aus den empfangenen Anfragen umfassen. Weiterhin kann der Informationsserver eine Nachrichtenerstellungseinheit zum Erstellen mindestens einer Nachricht und mindestens eine Ausgabeeinheit zur Übermittlung von Nachrichten an ein mobiles Endgerät umfassen. In der Nachrichtenerstellungseinheit können beispielsweise die an ein mobiles Endgerät zu übermittelnden Informationen in das Format eines UDP-Pakets gebracht werden. Auch Anweisungen und Antworten auf Anfragen des mobilen Endgerätes können in der Nachrichtenerstellungseinheit erzeugt werden.

Der Informationsserver weist vorzugsweise eine Speichereinheit zur Speicherung von Informationen auf und die Nachrichtenerstellungseinheit ist zumindest zeitweise mit der Speichereinheit verbunden. Hierdurch können für die Erstellung von Nachrichten notwendigen Angaben und Informationen von der Speichereinheit erhalten werden.

Der Informationsserver weist vorzugsweise eine Vergleichseinheit zum Vergleich empfangener Informationen mit auf dem Server gespeicherten Informationen aufweist und die Vergleichseinheit ist zumindest zeitweise mit der Speichereinheit des Informationsservers verbunden.

Die Ausgabeeinheit ist vorzugsweise zur Übermittlung von Cell-Broadcast-Nachrichten und zur Übermittlung von Datenpakten gemäß einem IP-Protokoll ausgelegt. Zudem kann die Ausgabeeinheit einen Zuschaltmechanismus aufweisen, durch den zu der Übermittlung von Cell-Broadcast-Nachrichten die Übermittlung von Datenpaketen gemäß dem IP-Protokoll zugeschaltet werden kann.

Gemäß einem weiteren Aspekt betrifft die Erfindung ein Kommunikationsprotokoll zur Übermittlung von Informationen mittels Datenpaketen entsprechend einem IP-Protokoll. Das Kommunikationsprotokoll zeichnet sich dadurch aus, dass die Datenpakete nach dem User Datagramm Protokoll UDP übermittelt werden und zur Einleitung der Datenübermittlung zumindest eine Anmeldungsanfrage vorgesehen ist, die von einem mobilen Endgerät an einen Informationsserver gesendet wird und die zumindest eine Angabe über den Empfangszeitpunkt der zuletzt an dem mobilen Endgerät empfangenen Information enthält.

Die Anmeldungsanfrage kann zumindest eine Angabe über die von dem mobilen Endgerät zu empfangenden Informationen enthalten. Diese Angabe der an dem mobilen Endgerät zu empfangenden Informationen kann zumindest eine Angabe über einen Übermittlungskanal umfasst. Der Übermittlungskanal entspricht dem Informationskanal beziehungsweise Cell Broadcast-Kanal. Der Informationsserver kann gemäß dem Kommunikationsprotokoll bei Erhalt der Anmeldeanfrage Informationen, die auf dem Informationsserver gespeichert sind, in Abhängigkeit der Angabe der zuletzt an dem mobilen Endgerät empfangenen Information, an das mobile Endgerät übermitteln. Weiterhin ist es nach dem Kommunikationsprotokoll möglich, dass eine Endnachricht von dem Informationsserver an das mobile Endgerät gesandt wird, wenn keine neuen Informationen auf dem Informationsserver vorliegen. Gemäß dem Kommunikationsprotokoll kann der Informationsserver bei Erzeugen einer neuen Information diese an das mindestens eine mobile Endgerät senden.

Nach dem Kommunikationsprotokoll kann das mobile Endgerät durch Senden einer Abmeldungsnachricht an dem Informationsserver abgemeldet werden. Vorzugsweise werden in dem Kommunikationsprotokoll für die Kommunikation zwischen dem Informationsserver und dem mindestens einen mobilen Endgerät vier Arten von Nachrichten verwendet. Eine Nachrichtenart kann eine Mitteilung, eine Nachrichtenart eine Anmeldungsanfrage, eine Nachrichtenart eine Abmeldungsanfrage und eine Nachrichtenart eine Informationsübermittlung darstellen. Die unterschiedlichen Nachrichtenarten werden vorzugsweise durch eine Angabe in der Startzeile der Nachricht identifiziert. Durch die Unterscheidung dieser Kategorien oder Arten von Nachrichten können diese einen dem jeweiligen Zweck angemessenen Aufbau, insbesondere Länge besitzen. Hierdurch kann der für die Kommunikation zwischen dem Informationsserver und dem Endgerät benötigter Datenverkehr minimiert werden.

Die Aufgabe, die der vorliegenden Erfindung zugrunde liegt, wird weiterhin durch ein mobiles Endgerät für die Verwendung in einem Mobilfunknetz, das für den Empfang und die Übermittlung von Datenpakten über ein IP-Protokoll ausgelegt ist gelöst, wobei dieses Endgerät eine Verwaltungseinheit aufweist, die für den Empfang von Informationen über zumindest zwei unterschiedliche Übermittlungsarten ausgelegt ist. Die Verwaltungseinheit wird im Folgenden auch als Client bezeichnet und das mobile Endgerät auch als Terminal.

Die Verwaltungseinheit kann zur Speicherung und Anzeige von empfangenen Informationen ausgelegt sein. Weiterhin kann die Verwaltungseinheit über die Übermittlungsart zwischen dem Informationsserver und dem mobilen Endgerät entscheiden. Insbesondere zu diesem Zweck ist die Verwaltungseinheit zur Überwachung des Empfangs von Informationen ausgelegt. Werden beispielsweise keine Cell Broadcast-Nachrichten an der Verwaltungseinheit empfangen, so kann diese auf eine alternative Übermittlungsart umschalten.

Die Verwaltungseinheit kann weiterhin zur Überwachung des Betriebszustandes des mobilen Endgerätes ausgelegt sein. Als Betriebszustand werden beispielsweise der Ruhezustand des mobilen Endgerätes, bei dem in der Regel die Beleuchtung der Anzeige abgeschaltet wird, oder der so genannte Idle-Mode, bei dem keine Anwendung von dem Nutzer aktiv verwendet wird, das mobile Endgerät sich aber nicht in dem Ruhezustand befindet, bezeichnet.

Die Verwaltungseinheit des mobilen Endgerätes kann weiterhin zur Erzeugung von Nachrichten ausgelegt sein.

Schließlich betrifft die vorliegende Erfindung ein Verfahren zum Verwalten von Informationen auf einem mobilen Endgerät eines Mobilfunknetzes. Dieses Verfahren zeichnet sich dadurch aus, dass dieses den Schritt des Erstellens einer Nachricht zur Übermittlung an einen Informationsserver umfasst. Weiterhin kann das Verfahren den Schritt des Ermittelns von auf dem mobilen Endgerät gespeicherten Daten umfassen. Vorzugsweise umfasst das Verfahren den Schritt des Überwachens mindestens eines Übermittlungskanals, der zur Übermittlung von Informationen von einem Informationsserver dient. Bei Erkennen des Ausbleibens von Informationen in dem mindestens einen Übermittlungskanal kann das Verfahren den Schritt des Erstellens einer Anmeldenachricht zur Übermittlung an einen Informationsserver umfassen.

Weiterhin kann das Verfahren den Schritt des Überwachens des Betriebszustandes des mobilen Endgerätes umfassen. Bei Erkennen des Wechsels des Betriebszustandes des mobilen Endgerätes kann das Verfahren den Schritt des Erstellens und Übermittelns einer Abmeldungsnachricht an einen Informationsserver umfassen.

Die Einheiten des Informationsservers und des mobilen Endgerätes, die vorstehend beschrieben sind, können zumindest teilweise auch zusammengefasst sein. Die Einheiten liegen vorzugsweise in Form von Programmen und/oder Schaltungen vor.

Die Merkmale und Vorteile, die bezüglich eines Gegenstandes der Erfindung beschrieben werden, gelten entsprechend und soweit anwendbar auch für die weiteren Gegenstände der Erfindung; selbst, wenn diese in dem Zusammenhang mit diesen gegebenenfalls nicht beschrieben sind.

Im Folgenden wird die Erfindung erneut im Detail erläutert.

Auf einem mobilen Endgerät, das im Folgenden auch als Terminal bezeichnet wird, wird eine Verwaltungseinheit für die Kommunikation mit dem Informationsserver installiert. Diese Verwaltungseinheit wird im Folgenden auch als Client bezeichnet.

Auf dem Informationsserver werden regelmäßig neue Informationen erstellt, die an die Terminals, die diesen Dienst in Anspruch nehmen wollen übermittelt werden sollen. Die Informationen werden auf den Informationsserver gespeichert. Die Speicherung erfolgt vorzugsweise unter Angabe des Erstellungszeitpunktes.

Die Informationen werden über Cell-Broadcast-Kanäle ausgestrahlt. Den einzelnen Kanälen können Informationskategorien zugeordnet sein. In dem Client ist eine Funktionalität, insbesondere ein Nutzermenü, vorgesehen, mittels dessen der Nutzer die für ihn relevanten Kanäle auswählen kann. Nach der Einstellung der Kanäle an dem Endgerät, wird der Client die entsprechenden CB-Kanäle überwachen. Bei Erkennen einer CB-Nachricht auf einem der Kanäle wird die in der Nachricht enthaltene Information auf dem Terminal, insbesondere auf einem Anzeigedisplay für den Nutzer sichtbar gemacht. Wird nachfolgend eine weitere CB-Nachricht empfangen, so kann diese die zuvor empfangene Information auf dem Display ersetzte oder zusätzlich zu dieser angezeigt werden.

Die Überprüfung nach verfügbaren Nachrichten (On-air) auf den entsprechenden Kanälen wird von dem Client nach vorgegebenen Regeln periodisch durchgeführt. Wird bei der Überwachung der Kanäle erkannt, dass keine CB-Nachrichten verfügbar sind, so stellt dies ein Indiz dafür dar, dass das Cell-Broadcast zumindest zeitweise nicht als Bearer zur Verfügung steht. Bei dem Cell-Brodcast wird ein konstanter Nachrichtenstrom übermittelt, bei dem jede Nachricht zumindest zweimal übermittelt wird und mindestens eine Stunde aufrechterhalten wird. Daher sind stets Nachrichten "on air", auch wenn dies überholte Nachrichten sind. Der Client kann daher erkennen ob die CB-Übermittlung als Baerer zur Verfügung steht, wenn er in den Kanälen Nachrichten erkennt, auch wenn diese überholt sind. Ältere Nachrichten werden vorzugsweise von dem Client als solche erkannt und dementsprechend nicht weiter verarbeitet. Steht das CB nicht als Baerer zur Verfügung, so wird der Client alternative Übertragungsmethoden testen.

Bei Erkennen des Ausbleibens oder der Nicht-Verfügbarkeit von CB-Nachrichten, wird der Client die alternativen Übertragungsmethoden in einer vorgegebenen Reihenfolge versuchen. Sobald eine der Übertragungsmethoden erfolgreich ist, kann der Client diese Speichern und bei einem späteren Verbindungsversuch in Abweichung der vorgegebenen Reihenfolge unmittelbar auf diese Übermittlungsmethode zurückgreifen. Auch in diesem Fall wird allerdings der Übermittlung über Cell-Broadcast stets der Vorzug gegeben. Sobald CB zur Verfügung steht wird diese Übermittlungsart verwendet, da diese Art der Übermittlung die geringsten Kosten verursacht. Wird auch während der Verwendung einer alternativen Übermittlungsmethode erkannt, dass CB-Nachrichten wieder zur Verfügung stehen, so wird die alternative Übermittlungsmethode gestoppt und auf die CB-Übermittlung zurückgegriffen. In einigen Fällen kann allerdings ein bereits begonnener Übermittlungsvorgang zunächst abgeschlossen werden, bevor die alternative Übermittlungsmethode unterbrochen wird.

Als alternative Übermittlungsmethoden können von dem Client insbesondere IPbasierte Übermittlungen in Form von Paket-Übermittlungen verwendet werden. Hierbei kann eine IP-Broadcast, IP-Multicast aber auch eine IP-Point-to-Point-Übermittlung gewählt werden. Bei der Übermittlung über IP-Mulitcast und IP-P2P muss sich der Client an dem Informationsserver für diese Übermittlung anmelden. Der Nutzer nimmt die Art der Übermittlung nicht wahr. Es ergibt sich für ihn also unabhängig von der Übermittlungsmethode kein Unterschied bei der Nutzung.

Der Client wird also die folgenden Schritte ausführen, um die Übermittlung der Informationen gewährleisten zu können. Zuerst wird das Vorliegen von CB-Nachrichten in den Kanälen, die vom Nutzer ausgewählt wurden und in Spezialkanälen überprüft. Sind CB-Nachrichten vorhanden, so werden diese entsprechend vorgegebenen Regeln verarbeitet. Sind hingegen nach einer vorgegeben Zeitdauer keine CB-Nachrichten vorhanden, so wird eine alternative Übermittlungsmethode getestet. Da die alternativen Übermittlungsmethoden eine IP-Verbindung erfordern, muss der Client zunächst auf das IP-Netz zugreifen beziehungsweise online gehen. Wird von dem Terminal aus bereits eine andere Anwendung genutzt, für die eine Verbindung zu dem IP-Netz hergestellt wurde, so kann unter bestimmten Voraussetzungen, die später genauer erläutert werden, auch dieser bereits bestehende PDP-Context für die Übermittlung der Nachrichten von dem Informationsserver verwendet werden und der Aufbau eine gesonderte Verbindung (PDP-Context) ist nicht notwendig.

Nach dem Aufbau des PDP-Contexts kann zunächst das Vorliegen von IP-Broadcastnachrichten überprüft werden und bei deren Vorliegen die Nachrichten entsprechend verarbeitet und auf dem Terminal angezeigt werden. Bestehen keine IP-Broadcastnachrichten, so kann der Client sich für die Übertragung mittels IP-Multicast anmelden. Geschieht diese Anmeldung erfolgreich, so können die Informationen auf dem Terminal über diese Übermittlungsmethode empfangen werden. Steht ein IP-Multicast nicht zur Verfügung, so kann sich der Client an dem Informationsserver für eine P2P-Verbindung anmelden und die Informationen über diesen Träger empfangen.

Bei der P2P-Übermittlung kann die Übermittlung mittels der so genannten "Push"-Technik erfolgen, bei der die Übermittlung von dem Server aus erfolgt. Diese Übermittlung ist vorteilhaft, da das Empfangen und Verarbeiten von Informationen asynchron erfolgen kann, das heißt immer, wenn neue Informationen zur Verfügung stehen. Im Vergleich zu einer Übermittlung, die nur auf Anfrage des Client erfolgt, kann bei der Push-Übermittlung sowohl die Resourcen-Nutzung als auch die Latenzzeit verringert werden. Der Server kann bei dieser Technik aufgrund der Netzauslastung und weiteren Netzparametern entscheiden, wann und ob Informationen übermittelt werden. Hierdurch wird die Bandbreiten-Nutzung vom Server gesteuert und optimiert. Die Anzeige des Client an dem Server, mit der dieser zu erkennen gibt, dass er verfügbar ist oder nicht mehr verfügbar ist, verursacht einen sehr geringen Datenverkehr, so dass der größere Teil des Datenverkehrs bei dieser Technik von dem Server zu dem Client auftritt. Zudem kann diese Technik einfach implementiert werden. Das MIDP (mobile information device profile) für das Terminal ist von geringem Umfang und kann beispielsweise mit etwa 10 Zeilen auskommen.

Im Folgenden wird das für die Übermittlung mittels P2P verwendete Kommunikationsprotokoll und das Format der übermittelten Datenpakte genauer beschrieben.

Zur Registrierung sendet der Client eine Registrierungsanfrage an den Server. Auf diese Anfrage hin sendet der Server eine Nachricht an den Client, in der entweder die Registrierung bestätigt wird, oder dem Client weitere Informationen für eine erfolgreiche Registrierung mitgeteilt werden. Empfängt der Client innerhalb einer vorgebbaren Zeitspanne keine Antwort von dem Server, so wird er eine erneute Registrierungsanfrage senden.

In dem Datenpaket, das der Client für die Registrierung an den Server sendet, sind Angaben über die Kanäle, die von dem Nutzer ausgewählt wurden enthalten. Weiterhin enthält dieses Datenpaket vorzugsweise eine Angabe darüber, zu welchem Zeitpunkt die letzte CB-Nachricht empfangen wurde. Nach Erhalt dieser Angaben sendet der Server ein Datenpaket für jede Information, die seit der zuletzt auf dem Terminal empfangenen Information auf dem Server erzeugt wurde. Es sind vorzugsweise Regeln in dem Server hinterlegt, die die Menge der Datenpakte beschränken. Beispielsweise kann eine Regel hinterlegt sein, dass nur eine bestimmte Anzahl von Datenpakten übermittelt werden soll, beispielsweise 100 oder 150, oder dass nur Datenpakete für solche Informationen versandt werden sollen, die nicht älter als beispielsweise einige Stunden oder einen Tag sind. Diese Regeln können in Abhängigkeit des Inhaltes der Informationen durch die Kanalzuordnung unterschiedlich sein. So können beispielsweise allgemeine Informationen, wie neue zur Verfügung stehende Informationsquellen auf einer Homepage länger an den Client gesendet werden als zeitkritische Informationen, wie Wetterberichte oder Staumeldungen.

Sobald der Server alle alten Nachrichten an den Client übermittelt hat, sendet der Server eine entsprechende Nachricht an den Client. Daraufhin ist dem Client bekannt, dass jedes ab diesem Zeitpunkt erhaltene Datenpaket mit Informationen neue Informationen übermittelt und diese entsprechend verarbeitet werden können.

Treten bei der Anmeldung an dem Server Probleme auf, so informiert der Server den Client entsprechend. Solche Probleme können beispielsweise die Verlagerung das Umspeichern des Informationsserver auf einen anderen Rechner, die Mangelnde Zeit für die Registrierung und dergleichen sein.

Ist der Informationsserver auf einen anderen Ort verschoben worden, so unterscheidet der Server bei der Angabe an den Client zwischen einem zeitweiligen Verschieben und einem permanenten Verschieben des Informationsservers. Im beiden Fällen übermittelt der Server dem Client auf die Registrierungsanfrage hin die Angabe darüber, dass der Server verschoben wurde und gibt auch die neue Position des Servers an, an dem der Client von nun an die Registrierung versuchen soll. Dies kann in einem oder in mehreren Datenpaketen erfolgen.

Weiterhin kann der Server dem Client anzeigen, dass die Zeit zur Registrierung nicht ausreichend war. In diesem Fall wird der Server dem Client ebenfalls angeben, wann eine erneute Registrierungsanfrage gesandt werden soll.

Schließlich kann bei der Registrierung von dem Server auch die Angabe, dass der Zugriff verboten ist, an den Client gesandt werden. Dies zeigt an, dass der Client diesen Server auch bei weiteren Registrierungen nicht mehr verwenden soll, es sei denn, dass das Terminal neu gestartet wird. Diese Antwort kann von dem Server beispielsweise in den Fällen versandt werden, in denen die alternative Übermittlungsmethode des Push ausgeschlossen werden soll.

Sobald Voraussetzungen gegeben sind, die eine Beendigung des Push von Informationen notwendig machen, beispielsweise die Verfügbarkeit von CB-Nachrichten, sendet der Client eine Abmeldungsnachricht an den Server. Nach Erhalt dieser Nachricht und senden einer Abmeldebestätigung an den Client sendet der Server keine weiteren Informationen beziehungsweise Datenpakete an den Client. Die Abmeldungsbestätigung wird an dem Client in der Regel nicht weiter verarbeitet. Dies ist insbesondere dann der Fall, wenn das Terminal abgeschaltet wurde oder sich in den Ruhezustand begeben hat.

Eine Abmeldung des Clients kann von dem Server auch automatisch in dem Fall erfolgen, in dem der Server auf die Übermittlung eines Datenpaktes hin von dem Netz eine ICMP (Internet control message protocol) Angabe empfängt, dass der Client nicht erreichbar ist.

Der Client nutzt einen Random-Port (Betriebssystem-Standard) um mit einem festgelegten Port in dem Server eine Verbindung aufzubauen. Der Server wird von dem angegebenen Port an den ursprünglichen Port des Clients antworten. Der Client überwacht den UDP-Port, der zur Registrierung an dem Server verwendet wurde.

Bei bestehender Registrierung an einem Server übermittelt dieser an den Client nach der gegebenenfalls anfänglich durchgeführten einmaligen Übertragung älterer Nachrichten bei der Erzeugung einer neuen Information auf dem Server jeweils ein Datenpaket an den Client. Bei dieser Übermittlung gibt der Server neben der Nachrichten-Nutzlast, der die eigentliche Information darstellt, die Kanal-Nummer, die Seriennummer sowie die Datenkodierung und die Länge des Inhaltes der Information an. Bei erfolgreicher Übermittlung einer Nachricht sendet der Client eine Bestätigung darüber, dass die erhaltene Information akzeptiert wurde an den Server. Diese Bestätigung wird in der Regel nur dann versandt, wenn der Server diese bei der Übermittlung des Datenpakets angefordert hat. Außer dieser asynchronen Übermittlung der Informationen bei Erzeugung einer jeden neuen Information kann der Server die erzeugten Informationen auch Speichern und in einer Übermittlungsfolge (Burst) einmalig an den Client übermitteln. Beispielsweise können statt dem Senden einer Information alle 10 Sekunden, die Nachrichten aufgereiht werden und alle 30 Sekunden 3 Nachrichten gesandt werden. Der Client kann diese Übermittlungsfolge nutzen, indem er auf den Erhalt der Nachricht, dass keine weiteren Informationen vorliegen wartet, bevor er die Anzeige auf dem Terminal aktualisiert.

Während der bestehenden Registrierung des Clients an dem Server können darüber hinaus weitere Angaben ausgetauscht werden. So kann von dem Server eine Aufrechterhaltungsanweisung an den Client gesandt werden. Diese kann verwendet werden, wenn eine aktivierte Verbindung zwischen dem Server und dem Client aufgrund von Netz-Konfigurationen notwendig ist. Der Server kann diese Anweisung aber auch dazu verwenden um zu testen, ob der Client noch verfügbar ist. Der Client wird diese Anweisung mit einer Nachricht beantworten, die anzeigt, dass der Client noch verfügbar ist.

Eine weitere Nachricht von dem Server an den Client ist die oben bereits beschriebene Nachricht, dass keine weiteren älteren Nachrichten auf dem Server vorhanden sind. Auf diese Nachricht erfolgt in der Regel keine Antwort seitens des Clients. Nachrichten, die im Anschluss erhalten werden, können mit einer Kennung, insbesondere einem Flag versehen sein, der anzeigt, dass diese Nachrichten neu sind. Dieser Flag kann in Abhängigkeit einer Updatenummer gesetzt werden. Ist die Updatenummer anders (größer oder kleiner) als die einer zuvor empfangenen Nachricht, so wird der Flag gesetzt.

Eine Nachricht, die von dem Client an den Server bei bestehender Registrierung erfolgen kann ist ebenfalls eine Aufrechterhaltungsanweisung. Diese kann verwendet werden, wenn eine aktivierte Verbindung zwischen dem Server und dem Client aufgrund von Netz-Konfigurationen notwendig ist. Der Client kann diese Anweisung aber auch dazu verwenden um zu testen, ob der Server noch verfügbar ist. Erhält der Client auf diese Anweisung keine Nachricht, so wird der Client erneut versuchen sich an dem Server anzumelden. Wird die Aufrechterhaltungsanweisung an dem Server empfangen, so sendet dieser eine Bestätigung an den Clienten, dass er noch erreichbar ist. Alternativ kann der Server eine Fehlermeldung an den Client senden, die entsprechend dem oben genannten Registrierungsverfahren eine 4xx oder 5xx-Fehlermeldung darstellen kann.

Weiterhin sind Nachrichten möglich, mit denen der Server dem Client anzeigt, dass das gesandte Paket nicht verstanden wurde, oder das der Dienst derzeit nicht verfügbar ist. Diese Fehlermeldung kann von einem Server bei bevorstehendem Absturz an alle Clients gesandt werden.

Zur Übermittlung der Informationen entsprechend der vorliegenden Erfindung werden vorzugsweise UDP-Datenpakete, das heißt Pakete nach dem User datagramm protokoll verwendet. Durch die Verwendung von UDP-Paketen, insbesondere unter Berücksichtigung des erfindungsgemäßen Kommunikationsprotokolls, kann eine gute Alternative zu dem Cell Broadcast zur Verfügung gestellt werden. Die Kosten können hierbei gering gehalten werden und eine geringe Latenzzeit kann realisiert werden. Im Vergleich zu der Verwendung von WAP kann mit dem erfindungsgemäßen Ansatz ein Datenstau verhindert werden. Da die Anzahl der Terminals hoch ist, wird der Informationsserver vorzugsweise in dem internen Netz des Netzbetreibers betrieben, um einen Stau auf den Netzseite, zum Beispiel der NAT-Tabellen zu verhindern. Auch gegenüber der Übermittlung in TCP-Datenpakten weist der Ansatz der Übermittlung in UDP-Paketen nach eines IP-Protokoll erhebliche Vorteile auf. Bei der TPC-Übermittlung ist die Übertragung auf 65K pro IP beschränkt. Dank der in dem vorgeschlagenen Kommunikationsprotokoll vorgeschlagenen Kommunikationsregeln kann ein eventuell auftretender Datenpaketverlust, der beispielsweise auch bei der Übertragung mittels CB auftritt ausgeglichen werden. Die Übertragung mittels UDP weist weiterhin den Vorteil auf, dass dieses zustandslos ist und lediglich das Hin- und Hersenden von Datenpaketen erfordert. UDP beansprucht keine Resourcen auf Seiten des Servers außer dem Empfangen und Verarbeiten von Paketen und dem Versenden von Paketen. Zudem können bei der Verwendung von UDP auch Dienste, wie das IP-Multicast und IP-Braodcast realisiert werden, was mir Paketen nach dem TCP-Standard nicht möglich ist.

Weiterhin ist die Übertragung nach einem IP-Protokoll von Vorteil, da auf einfache Weise das Netz so konfiguriert werden kann, dass dieses einen UDP oder auch einen TCP-Port als Träger von nicht abrechenbaren Daten ist. Der durch die gegebenenfalls notwendige zusätzliche Herstellung von PDP-Contexten für die Übermittlung von Datenpaketen bedeutet einen relativ geringen Verkehrsaufwand. Das Verkehrsaufkommen kann darüber hinaus durch die Verwendung von UDP als Träger und einfachen Anfangskennsätzen (Header) in dem Kommunikationsprotokoll minimiert werden.

Die Größe der Information in einer UDP-Nutzlast oder nach der Verknüpfung aller CB-Seiten und vor der 7bit-Dekodierung muss ein Vielfaches von 82 Oktetts darstellen, da in einer CB-Nachricht kein Header zur Definition der tatsächlichen Seitengröße existiert. Das Format der Informationen, die übermittelt werden ist unabhängig von dem Baerer, der zur Übermittlung verwendet wird. Erfindungsgemäß können vorzugsweise XHTML-MP, XHTML-MP Snippet und Multipart-Formate verwendet werden.

Das Format der Datenpakete und die Anfangskennsätze, die gemäß dem vorgeschlagenen Protokoll verwendet werden, und die den Anfangskennsätzen zugeordneten Werte werden im Folgenden im Detail erläutert.

Die Informationen werden gemäß dieser Erfindung vorzugsweise in einem UDP-Format versandt. Als maximale Nutzlast werden 1283 bytes definiert. Diese Nutzlast wird bei der CB-Nachrichtenübermittlung verwendet. Da diese Größe optimal in nur ein UDP-Paket, das in der Regel eine MTU (maximum transmission unit) von 1500 besitzt, passt, ist es nicht notwendig die Informationen zu verknüpfen oder erneut zu erstellen. Jede Information, die über CB übertragen wird, entspricht bei dem UDP-Push exakt einem UDP-Paket.

Wie bei dem HTTP- oder SIP-Protokoll wird auch bei dem erfindungsgemäßen Kommunikationsprotokoll vorzugsweise nur der Beginn des Headers, der den Dienst und die Versionsnummer des Dienstes, sowie die Angabe über die Art der Nachricht enthält interpretiert. Insbesondere wird außer dem Dienst und der Versionsnummer nur die Zahlenidentifikation der Nachricht, beispielsweise nur der Teil "LC/1.0 XXX" interpretiert und der darauf folgende Text ignoriert. Beispielsweise werden "LC/1.0 200 OK", "LC/1.0 200" oder "LC/1.0 200 Everything's well in the world" alle als Nachricht "200 OK" interpretiert.

Die erfindungsgemäß übermittelten Nachrichten sind Anfrage- und Antwortnachrichten, die entweder von dem Server oder dem Client gesandt werden. Die Anfrage- und Antwortnachrichten verwenden hierbei das in RFC 822 (Standard for the format of ARPA Internet text messages) angegebene Format, um die Nutzlast der Nachricht zu übermitteln. Beide Arten der Nachricht umfassen als Wrapper eine Startzeile, einen oder mehrere Anfangskennsätze (Header) eine Leerzeile, sowie gegebenenfalls einen Nachrichtenkörper, in dem die eigentliche Information enthalten sein kann. Bei einer Anfrage besteht die Startzeile aus einem Method-Token, der die Aktion angibt, einem vorgegebenen String, der beispielsweise der Name des Dienstes sein kann, der Versionsangabe des verwendeten Übermittlungsprotokolls und einem Zeilenumbruch. Bei der Antwortnachricht besteht die Startzeile aus einer Angabe über die Protokollversion gefolgt von einem numerischen Status-Codes und der diesem zugeordneten Text.

Bei dem verwendeten Kommunikationsprotokoll werden insbesondere die folgenden Method-Tokens, die die ausgeführte Aktion angeben verwendet, wobei einige nur in einer Kommunikationsrichtung, das heißt vom Server zum Client (Server-Method) oder in entgegen gesetzter Richtung (Terminal-Method) oder beidseitig (General-Method) zur Verfügung stehen. Beispiele hierfür sind im Folgenden angegeben, wobei für oder steht.

```
 General-Method = "NOT"
 Terminal-Method = "REG"
  | "UNREG"
 Server-Method = "MSG"
  | XXX
```

Der Statuscode ist vorzugsweise ein dreistelliger ganzzahliger Ausdruck, mit dem der Versuch die Anfrage zu verstehen und zu verarbeiten ausgedrückt wird. Der diesem zugeordnete Text dient dem Nutzer für das bessere Verständnis, sofern er sich diesen anzeigen lässt.

Die erste Zahl des Status-Codes zeigt die Klasse der Antwort an, wobei in der Regel vier Werte verwendet werden:
- 2xx: Erfolgt (Success) - Die Aktion wurde erfolgreich empfangen, verstanden und akzeptiert.
- 3xx: Umleitung (Redirection) - Weitere Aktionen müssen ausgeführt warden, bevor die Anfrage ausgeführt werden kann
- 4xx: Client Fehler (Client Error) - Die Anfrage enthält eine falsche Syntax oder kann nicht ausgeführt werden
- 5xx: Server Fehler (Server Error) - Der Server hat dabei versagt eine offensichtlich valide Anfrage zu erfüllen

Beispiele für die Status-Codes sind im Folgenden angegeben, wobei für oder steht, und werden später unter Bezugnahme auf die Kommunikation zwischen dem Server und Client genauer erläutert.

```
 Status-Code = General-Status | Terminal-Status | Server-Status
 General-Status = "200" ; "OK"
                       | "400" ; "Bad Request"
                       | "500" ; "Server Error"
     Terminal-Status = "202"; "Accepted"
     Server-Status = "301"; "Moved Permanently"
                       |"302" ;"Moved Temporarly"
                       |"403" ; "Forbidden"
                       |"423" ; "Interval Too Brief"
 Reason-Phrase = TEXT
                       |"503"; "Service Unavailable"
```

Die Header, die erfindungsgemäß verwendet werden sind beispielhaft in der folgenden Auflistung aufgezeigt, wobei | für oder steht und SP ein Leerzeichen darstellt.

```
 Nachrichten-Header = Field-Name ":" Field-Value
 Feldname (Field-Name) = General-Header
                                     |Request-Header
                                     |Response-Header
 Feld-Wert (Field-Value) = *SP TEXT *SP
 Allgemeiner Header (General-Header) = "seq"
                            |XXX
 Anfrage-Header (Request-Header) = "ch"; Channels (ch) Header
                            |"lm" ; Last-Message (1m) Header
                            |"f" ; From (f) Header
                            |"aid" ;AreaID (aid) Header
                            |"cid" ; CellID (cid) Header
                            |"mc" ; Mobile-Code (mc) Header
                            |"ua" ; User-Agent (ua) Header
                            |"cn" ; Channel Number (cn) Header
                            |"sn" ; Serial Number (sn) Header
                            |"dc" ; Data-Coding (dc) Header
                            |"l" ; Content-Length (1) Header
                            |"dr" ; Deliver-Report (dr) Header
 Antwort-Header (Response-Header) = "1o" ; Location (1o)
 Header
                            |"ra" ; Repeat-After (ra) Header
                            |XXX
```

Die einzelnen Header, deren Werte und Bedeutung werden im Folgenden erneut erläutert.

### Anmeldung (Client an Server):

Zur Registrierung des Clients an dem Server, sendet der Client eine Nachricht mit beispielsweise dem folgenden Format:
   REG livecast LC/1.0
   seq: x
   ch: 1, 3, 6, 43, 66
   1m: 20040101120000
   f: +491xxxxxxxxx
   ua: live!cast/1.0 Platform/x.0 OS/y.0 Vendor/z.0

Der CSeq Header (seq) enthält eine sequentielle Nummer, die für jedes Paket inkrementell erhöht wird. Auf diese Weise können Anfrage und Antwort, die zu einem Datenpaket gehören, korreliert werden. Der Kanal-Header Channels Header (ch) enthält eine Liste der Kanäle, an denen der Nutzer sich angemeldet hat. Kanäle werden in dem Standard 3GPP 23.041, der die technische Umsetzung von Cell-Braodcast-Diensten beschreibt, als "Message Identifier" bezeichnet. Die Angabe der Kanäle ist jeweils durch ein Komma getrennt, wobei zur Bezeichnung der Kanäle die gleichen Bezeichnungen gewählt werden, die auch für eine einfache CB-Übermittlung verwendet werden. So entspricht beispielsweise die Angabe ch: 1,7,15
den tatsächlichen CB-Kanälen: 0xA001, 0xA007 and 0xA00F.

Der optional in der Nachricht enthaltene Last-Message Header (Im) enthält den Zeitpunkt der zuletzt erhaltenen Information. Diese kann das Datum und gegebenenfalls eine Stunden- und Minuten-Angabe umfassen und beispielsweise folgendes Format aufweisen: (YYYYMMDDHHMMSS[{+|-}HH[MM]]).

Der ebenfalls optional in der Nachricht enthaltene From-Header (f) enthält die MSISDN des Nutzers.

Schließlich kann in der Nachricht des Registrierungs-Datenpaketes, das von dem Client an den Server gesandt wird, optional ein User-Agent Header (ua) enthalten sein, der die Software, die für den Übermittlungsdienst verwendet wird, die Marke und das Modell des Terminal oder weitere relevanten Informationen als String angibt.

Notwenige Angaben in dem Wrapper der Registrierungsanfrage sind somit neben der Angabe, dass es sich um eine Registrierungsanfrage handelt (REG), die Angaben einer sequentielle Nummer und der Kanäle, die von dem Nutzer ausgewählt wurden. Zusätzlich können Angaben über die zuletzt empfangene Nachricht, die Adresse des Clients und den Nutzer-Agent enthalten. Der Wrapper ist somit sehr kurz gehalten. Ein Nutzlast-Körper, das heißt eine Information oder ein Inhalt, ist bei dieser Nachricht nicht vorhanden.

Auf diese Nachricht hin wird eine Antwort erwartet, die einen der folgenden Response-Status angibt: "200", "301", "302", "400", "403", "423", "500"

### Anmeldung (Server an Client):

Die Antworten des Servers auf eine Registrierungsanfrage können folgende Header umfassen:
   Bei erfolgreicher Registrierung sendet der Server die Angabe
   LC/1.0 200 OK
   seq: x
   und gibt damit an, dass der Server die Verbindung akzeptiert und ältere, das heißt vor dem Zeitpunkt Lm erzeugte Informationen an den Client senden wird. Der Client wird auf den Empfang einer Endnachricht warten, die angibt, dass keine weiteren älteren Nachrichten auf dem Server vorliegen. Nach dieser Nachricht kann der Client in dem aktiven Status bleiben oder in den Ruhezustand übergehen. Der Client wird bei dieser Nachricht eine 200xx als 200 OK-Nachricht interpretieren.

Die Angabe in dem CSeq (seq) Header wird den gleichen Wert, wie enthalten, der in diesem Header in dem Datenpaket der Registeranfrage von dem Client gesandt wurde.

Kann die Registrierung hingegen nicht erfolgen und will der Server, dass sich der Client an einem neuen Server anmeldet und diesen jedes mal verwendet bis das Terminal erneut gestartet wird, so sendet der Server statt der Registrierungsbestätigung eine Nachricht 301 Moved Permanently der folgenden Form
LC/1.0 301 Moved Permanently
seq: x
lo: 1.2.3.4:5678

Hierbei enthält der Location Header (lo) die IP-Adresse des neuen Servers und den Port an dem sich das Terminal anmelden soll. Wenn der Port nicht verfügbar ist, wird der Client den gleichen Port verwenden, der ursprünglich konfiguriert wurde und die neue IP-Adresse.

Soll der Client nur vorübergehend einen anderen Server verwenden, so sendet der Server, an dem die Registrierungsanfrage erhalten wurde eine 302 Moved Temporarily-Nachricht der folgenden Form:
LC/1.0 302 Moved Temporarily
seq: x
lo: 1.2.3.4:5678

Auch hierbei gibt der Location-Header die IP-Adresse und den Port des neuen Servers an. Der Client wird sich daraufhin nur einmalig an dem neuen Server anmelden und bei der nächsten Anmeldung wieder auf den Standardserver zugreifen.

War das Intervall für die Registrierung zu kurz, so sendet der Server eine Fehlermeldung 423 Interval Too Brief der folgenden Form:
LC/1.0 423 Interval Too Brief
seq: x
ra: 7200

Dies zeigt an, dass das Terminal nach x Sekunden, die in einem Retry-After-Header spezifiziert sind, erneut eine Registrierung versuchen soll. Der Retry-After (ra)-Header enthält die Mindestanzahl an Sekunden, die der Client abwarten soll bevor ein erneuter Registrierungsversuch gestartet wird.

Schließlich kann der Server auf die Registrierungsanfrage auch die Fehlermeldung 403 Forbidden in dem folgenden Format senden:
LC/1.0 403 Forbidden
seq: x

Dies bedeutet, dass der Server keine weiteren Registrierungsanfragen des Clients empfangen will, bis das Terminal erneut gestartet wird. Diese Fehlermeldung kann beispielsweise verwendet werden, um alternative Übermittlungsmethoden abzuschalten.

Wird eine andere 4xx Fehlermeldung an den Client gesandt wird diese die Fehlermeldung ignorieren. Wird eine 5xx-Meldung von dem Server gesandt, so wird der Client nach ein paar Sekunden erneut versuchen sich anzumelden und diese Zeit so lange exponentiell erhöhen, so lange 5xx -Fehler von dem Server erhalten werden. Vorzugsweise wird ein Maximalwert von beispielsweise einem Tag beachtet.

### Abmeldung (Client an Server):

Zur Abmeldung von einem Server sendet der Client an den Server eine Abmeldungsnachricht, die das folgende Format besitzt:
   UNREG livecast LC/1.0
   seq: x

Hierdurch wird dem Server angezeigt, dass der Client keine weiteren asynchronen Informationen empfangen will. Dies ist beispielsweise der Fall, wenn das Terminal in den Ruhezustand übergeht.

Notwenige Angabe in der Abmeldungsanfrage ist somit neben der Angabe, dass es sich um eine Abmeldungsanfrage handelt (UNREG), die Angaben der sequentielle Nummer. Es sind hierbei weder optionalen Header noch ein Nutzlast-Körper, das heißt eine Information oder ein Inhalt, vorgesehen.

Auf diese Nachricht hin wird eine Antwort erwartet, die einen der folgenden Response-Status angibt: "200", "400", "500"

### Abmeldung (Server an Client):

Auf diese Abmeldung des Clients kann der Server eine Bestätigung an den Client senden, in dem die Abmeldung bestätigt wird. Diese Bestätigungsnachricht kann folgendes Format aufweisen:
   LC/1.0 200 OK
   seq: x

Dieses Datenpaket wird von dem Client in der Regel nicht weiter verarbeitet, weil sich beispielsweise das Terminal bereits in dem Ruhezustand befindet.

Informationsübermittlung (Server an Client):
Das Datenpaket zur Informationsübermittlung kann folgenden Wrapper aufweisen:
   MSG livecast LC/1.0
   seq: x
   cn: <channel_number>
   sn: <serial_number>
   dc: <data_coding>
   1: 123
   dr: true
   <div><div id="ti">Title</div>...</div>

Hierbei müssen die Angaben über die Kanal-Nummer, die Seriennummer, die Sequenznummer, die Datenkodierung, die Inhaltslänge und die Nachrichten-Nutzlast angegeben sein. Der Header des Zustellungsberichts ist optional.

Der Channel-Number Header (cn) enthält den Nachrichtenkanal als eine Dezimalzahl beispielsweise "1" oder "200", die sich auf das 0xA000-0xAFFF-Band bezieht. Die Werte dieses Headers entsprechen denen, die bezüglich der Kanäle bei der Registrierung angeben wurden. Beispielsweise beziehen sich
ch: 1,7,15
auf die tatsächlichen CB-Kanäle 0xA001, 0xA007 and 0xA00F.

Der Serial-Number (sn)-Header enthält eine fortlaufende Nummer beziehungsweise Seriennummer der Nachricht und dient dazu doppelt versandte Nachrichten erkennen zu können. Weiterhin kann die Seriennummer dazu verwendet werden eine Nachricht mit einem Flag zu versehen, der diese als neue Nachricht kennzeichnet, wenn die Seriennummer der aktuellen Nachricht von der einer zuvor empfangenen Nachricht abweicht, das heißt größer oder kleiner ist. Die Seriennummer wird als eine Dezimalzahl zwischen 0 and 65535 (0x0000 to 0xFFFF) angegeben.

Der Wert des Data-Coding Headers (dc) wird als Dezimalzahl entsprechend dem für eine CB-Übermittlung spezifizierten Wert zwischen 0 und 255 versendet und kann beispielsweise 15 betragen. Der Wert basiert auf dem in dem Standard 3GPP 23.038 definierten Data Coding Scheme. Wobei erfindungsgemäß sowohl 7bit als auch 8bit-Nachrichten verwendet werden.

In dem Content-Length Header (I) ist der Wert der Nutzlastgröße in bytes in dezimaler Form angegeben. Wenn dieser Wert von dem tatsächlichen Wert der Nutzlastgröße abweicht, muss die Nachricht verworfen werden. Da die Größe der einer CB-Nachricht entsprechen muss, müssen Nachrichten mit einem Wert von größer als 1230 bytes verworfen werden.

Mit dem optional verwendeten Delivery-Report Header (dr) wird der Client aufgefordert ein Zustellungs-Berichts-Paket zurückzusenden. Der Wert dieses Headers ist boolesch und kann beispielsweise "0"/"1" or "True"/"False" or "Yes/No" sein, wobei dies vorzugsweise ohne Beachtung der Groß- und Kleinschreibung erfolgt.

Die Message Payload beziehungsweise Nutzlast des Informations-Datenpaketes entspricht der einer CB-Nachricht.

Notwendige Angaben in der Nachrichtenanfrage ist somit neben der Angabe, dass es sich um eine Nachrichtenanfrage handelt (MSG), die Angaben der sequentiellen Nummer, der Kanal-Nummer, der Seriennummer, der Daten-Codierung und der Länge des Inhaltes der Nachricht, das heißt der Nutzlast. Optionaler Header kann eine Aufforderung zur Übersendung eines Zustellungsberichts sein.

Auf diese Nachricht hin wird entweder keine Antwort oder eine Antwort erwartet, die einen der folgenden Response-Status angibt: "202"

### Informationsübermittlung (Client an Server):

Wenn der Server einen Zustellungsbericht angefordert hat, sendet der Client eine Paket des folgenden Formates:
   LC/1.0 202 ACCEPTED
   seq: x

Dies ermöglicht es dem Server sicher zu stellen, dass das Datenpaket zugestellt wurde und der Betreiber des Informationsdienstes kann entscheiden diese Information zu verwenden, wenn eine große Anzahl fallen gelassener Datenpakete erkannt wird und diese erneut gesendet werden müssen. Eine Alternative zu dem Versenden eines Zustellungsberichts ist das mehrfache Versenden einer Information. Dies wäre möglich, da vorzugsweise auch bei dem UDP-Push, wie auch bei der CB-Übermittlung die Anforderung des Ignorierens von doppelt gesendeten Informationen erfüllt wird. Dies kann beispielsweise über die Seriennummer, die der Nachricht zugeordnet ist, realisiert werden.

Mitteilungen (Server an Client):
Mitteilungen des Servers an den Client besitzen vorzugsweise das folgende Format:
   NOT livecast LC/1.0
   not: <notification_code>
   seq: x
   1: xxx

Gegebenenfalls kann sich an diese Header ein Text anschießen.

Der Wrapper muss einen Notification Code (not) und einen CSeq (seq) Header umfassen und kann optional eine Nutzlast beinhalten. Ist eine Nutzlast vorgesehen, so muss ein Inhalts-Längen-Header (Content-Length (I)) enthalten sein, der bei fehlender Nutzlast entfallen kann.

Eine mögliche Mitteilung kann 100 (Keep Alive) sein. Diese kann verwendet werden um die Verbindung aufrecht zu erhalten, falls diese aufgrund einer Netzkonfiguration erforderlich ist. Weiterhin kann der Server diese Mitteilung verwenden, um zu überprüfen, ob der Client noch verfügbar ist. Der Client nimmt diese Mitteilung an und wird mit einer 200 OK-Mitteilung den Server darüber informieren, dass dieser noch verfügbar ist. Diese Mitteilung hat das folgende Format.
LC/1.0 200 OK
seq: x

Eine weitere Mitteilung, die von dem Server gesandt werden kann, kann ist die 101 (No More Messages)-Mitteilung. Diese wird verwendet, um den Client darüber zu informieren, dass alle älteren Informationen übermittelt wurden und das Terminal bis zum Erhalt neuer Nachrichten in dem aktiven Zustand verbleiben kann oder sich abmelden kann, wenn das Terminal in den Ruhezustand übergeht. Auf diese Mitteilung ist eine Antwort des Client nicht erforderlich.

### Mitteilungen (Clients an Server)

Der Client kann an den Server Mitteilungen des folgenden Formates senden:
NOT livecast LC/1.0
not: <notification_code>
seq: x
1: xxx

Gegebenenfalls kann sich an diese Header ein Text anschießen.

Der Wrapper muss einen Notification Code (not) und einen CSeq (seq) Header umfassen und kann optional eine Nutzlast beinhalten. Ist eine Nutzlast vorgesehen, so muss ein Inhalts-Längen-Header (Content-Length (I)) enthalten sein, der bei fehlender Nutzlast entfallen kann.

Eine mögliche Mitteilung kann 100 (Keep Alive) sein. Diese kann verwendet werden um die Verbindung aufrecht zu erhalten, falls diese aufgrund einer Netzkonfiguration erforderlich ist. Weiterhin kann der Client diese Mitteilung verwenden, um zu überprüfen, ob die Serververbindung noch verfügbar ist. Erhält der Client keine Antwort auf diese Mitteilung wird er erneut versuchen sich an dem Server anzumelden. Ist der Server verfügbar, so wird der Server die Mitteilung annehmen und mit einer 200 OK-Mitteilung antworten, um den Client drüber zu informieren, dass der Server noch verfügbar ist. Der Server kann aber auch mit einem der 4xx oder 5xx-Fehlercodes antworten, worauf hin der Client die bei der Beschreibung des Registrierungsvorgangs erwähnten Schritte unternehmen wird.
LC/1.0 200 OK
seq: x

### Weitere Antwort-Codes:

Der Server kann beispielsweise eine 400 Bad-Request-Anwort senden, wenn ein von dem Client gesandtes Paket nicht verstanden wird. Die gleiche Nachricht kann auch im umgekehrten Fall gesandt werden, in dem der Client ein empfangenes Paket nicht versteht.
LC/1.0 400 Bad Request
seq: x

Eine 503 Service Unavailable-Nachricht wird, sofern möglich versandt, wenn Unregelmäßigkeiten auf dem Server auftreten. Wenn möglich sendet der Server diese Nachricht an alle Clients, bevor er ausfällt. Empfängt ein Client diese Nachricht, so wird er nach ein paar Sekunden versuchen sich erneut anzumelden.
LC/1.0 503 Service Unavailable
seq: x

Um das Nutzerempfinden und den Stromverbrauch und dadurch die Batteriebelastung an dem Terminal weiter optimieren zu können, können bei der erfindungsgemäß vorgeschlagenen Übermittlung die folgenden Regeln berücksichtigt werden.

Für die Übermittlung über eine der alternativen Übermittlungsmethoden sowie den Empfang und die Verarbeitung von empfangenen CB-Nachrichten wird insbesondere der Status beziehungsweise Zustand berücksichtigt, in dem sich das Terminal befindet.

Befindet sich das Terminal in dem Ruhezustand, in dem die Funktionen des Terminals auf ein Minimum reduziert sind, um den Batterieverbrauch zu minimieren, so wird nach der vorliegenden Erfindung die Übermittlung wie folgt erfolgen. Bei dem Übergang in den Ruhezustand werden die CB-Kanäle deaktiviert. In diesem Ruhezustand wird das Terminal automatisch in regelmäßigen Zeitabständen von beispielsweise mehreren Minuten aufgeweckt und die CB-Kanäle aktiviert. Neue Informationen werden empfangen und die Kanäle werden nach einer vorgegebenen Zeitdauer wieder deaktiviert. Die während des Ruhezustandes empfangenen Informationen können unmittelbar oder erst bei dem Betätigen des Terminals durch den Nutzer angezeigt werden, durch das das Terminal aus dem Ruhezustand geholt wird. Wird eine neue Information erhalten, so wird die Nachrichtenreihe um die neue Information aktualisiert und eine interne Variable wird mit dem Zeitpunkt der zuletzt empfangenen CB-Nachricht aktualisiert.

Befindet sich das Terminal in einem Ruhezustand und sind keine CB-Nachrichten verfügbar, so wird keine der alternativen Übermittlungsmethoden eingesetzt. Erst beim Aufwachen des Terminals wird der oben beschriebene Aktualisierungsschritt durchgeführt, mit dem alle seit der zuletzt empfangenen CB-Nachricht erzeugten Informationen an den Client übermittelt werden. Dieser Aktualisierungsschritt wird aber nur dann durchgeführt, wenn keine weitere Anwendung, deren Anzeige auf dem Display für den Nutzer von Bedeutung ist, aktiv ist. Dies wird später genauer erläutert.

Außer der Tatsache, ob sich das Terminal in dem Ruhezustand befindet wird vorzugsweise auch überprüft, ob das Terminal von dem Nutzer derzeit verwendet wird. Befindet sich die Anzeige des Terminal in dem Idle-Screen ist davon auszugehen, dass der Nutzer das Terminal derzeit nicht verwendet. In diesem Zustand können sowohl die Übermittlung von Informationen als auch deren Anzeige auf dem Display erfolgen. Wird ein Terminal aufgeweckt und begibt sich in den Idle-Zustand, so wird ein Timer gestartet, z.B. auf 5 Sekunden. Ist der Timer abgelaufen und befindet sich das Terminal immer noch in dem Idle-Modus oder werden die neuesten Informationen aktiv von dem Nutzer angefordert, beispielsweise durch Navigation in einem Menü, das durch den Client bereitgestellt wird, so kann die alternative Übermittlungsmethode, insbesondere der UDP-Push gestartet werden und der Inhalt der Informationen wird regelmäßig aktualisiert. Vor dem Start des UDP-Push wird der Client zunächst überprüfen, ob die letzte empfangene CB-Nachricht älter als ein vorgegebener Zeitwert ist und nur, wenn dies der Fall ist, wird der UDP-Push gestartet. Nach dem Starten des UDP-Push werden die Informationen asynchron erhalten und stehen dem Nutzer in Echtzeit zur Verfügung.

Auch nach dem Anschalten des Terminals wird der Client eine vorgegebene Zeitspanne abwarten und erst nach Ablauf dieser Zeitspanne ohne Empfang einer CB-Nachricht auf eine der alternativen Übermittlungsmethoden zurückgreifen.

Weiterhin wird vorzugsweise überprüft, ob auf dem Terminal eine Anwendung ausgeführt wird. Handelt es sich bei der Anwendung beispielsweise um die Navigation durch von dem Client zur Verfügung gestellte Felder, so wird davon ausgegangen, dass der Nutzer auch zu diesem Zeitpunkt an dem Erhalt der neuesten Informationen interessiert ist und es wird daher, vorgegangen, wie oben für den Idle-Modus beschrieben. Insbesondere, wenn der Nutzer eine Taste oder ein Feld bedient, durch das der Empfang der neuesten Nachrichten angefordert wird, wird der UDP-Push unmittelbar gestartet.

Handelt es sich hingegen bei eine derzeit ausgeführten Anwendung um eine andere Anwendung, so wird bei dem Übergang vom Idle-Modus in den Anwendungsmodus der UDP-Push nicht aktiviert. Erst, wenn der Nutzer das Terminal erneut in den Idle-Modus versetzt oder in dem Menue des Client navigiert, wird der UDP-aktiviert. Ist das Terminal hingegen bereits mit dem Netz für den UDP-Push verbunden, wenn eine andere Anwendung gestartet wird, so werden folgende Regeln eingehalten. Erfordert die gestartete Anwendung eine Verbindung zu dem IP-Netz und kann den gleichen PDP-Context verwenden, der für den UDP-Push bereits hergestellt wurde, so wird dieser durch die Anwendung genutzt. Bei Beendigung der Anwendung wird der PDP-Context aufrechterhalten. Alternativ kann für die Anwendung ein weiterer PDP-Context hergestellt werden. Dies kann beispielsweise dann der Fall sein, wenn die Anwendung die gleiche APN (access point name), wie der UDP-Push verwendet aber eine gemeinsame Nutzung der Verbindung nicht möglich ist. Dieser weitere oder parallele PDP-Context kann bei Beendigung der Anwendung fallen gelassen werden ohne den UDP-Push zu beeinflussen. Handelt es sich bei der Anwendung um eine Anwendung, die eine Verbindung zu dem IP-Netz benötigt aber nur einen PDP-Context zulässt, so wird der PDP-Context für den UDP-Push fallengelassen und ein eigener PDP-Context hersgestellt, der bei Beendigung der Anwendung fallen gelassen wird. Der UDP-Push wird vorzugsweise bei der Beendigung der Anwendung nicht automatisch gestartet.

Wird von dem Client festgestellt, dass die IP-Verbindung entfallen ist, so wird er sich erneut anmelden. Ist beispielsweise eine 3G Verbindung schlecht und das Terminal schaltet auf eine 2G-Verbindung um, kann sich das Terminal automatisch von dem 3G-PDP-Context trennen und sich erneut über einen 2G PDP-Context verbinden und eine neue IP-Verbindung erhalten. Der Client wird erkennen ob dieser neue PDP-Context aktiviert ist und sich erneut an dem Server anmelden. Wird der 2G-PDP-Context nicht automatisch aktiviert, so wird der Client die oben angegebenen Bedingungen berücksichtigen, im zu entscheiden, ob eine Verbindung hergestellt werden soll. Insbesondere kann die Verfügbarkeit von CB-Nachrichten oder dem Betriebszustand des Terminals und die Nutzung einer anderen Anmeldung berücksichtigt werden.

Der Nutzer kann an dem Terminal eine Anzeige aufrufen beziehungsweise ein Fenster öffnen, in dem dieser die Kanäle, die für ihn von Interesse sind, auswählen kann. Wird bei bestehender Registrierung an einem Server für einen UDP-Push dieses Kanalauswahlfenster geöffnet geändert, so wird der Client sich an dem Server abmelden und sich erneut anmelden, um die Kanalliste zu aktualisieren. In dem Client kann eine Logik hinterlegt sein, nach der erkannt werden kann, ob die Kanäle tatsächlich geändert wurden und so eine erneute Anmeldung vermeiden zu können, wenn die Liste der Kanäle unverändert bleibt.

Die Informationen, die an den Client gesendet werden, können relative Links enthalten. Diese werden in dem Client mit einer Basis-URL verknüpft, um einen absluten Link zu schaffen. Bei der CB-Übermittlung sollte der der Link länderabhängig sein. Bei der UDP-Übermittlung hingegen sollte der Link stets der Link des Heimatlandes sein und ein Ersetzten des Landes sollte unterbleiben.

Da bei einer Verwendung des UDP-Pushes in einem Roaming-Szenario Gebühren anfallen können, kann in einem Einstellungsmenü für den Client die Option des Deaktivierens des UDP-Push-Baerers bei Roaming vorgesehen sein. Die Voreinstellung dieser Option ist vorzugsweise auf deaktiviert gestellt. Verbindet sich der Nutzer mit dem IP-Netz, und wird von dem Client beim Roaming eine alternative Übermittlungsmethode verwendet, so kann eine Logik vorgesehen sein, durch die nur weniger Informationen übermittelt werden oder nur ausgewählte Informationen, die sich auf den Ort beziehen, an dem sich der Nutzer aufhält, wie beispielsweise Wetter- und Verkehrsnachrichten.

Zur Ausführung des beschriebenen Kommunikationsprotokolls und des erfindungsgemäßen Verfahrens sollte vorzugsweise Cell-Broadcast als Übermittlungsmethode bei für alle Funkzugangskanälen (2G und 3G), die das mobile Endgerät beziehungsweise Terminal unterstützt, unterstützt sein.

Die Verwaltungseinheit beziehungsweise der Client auf dem Terminal sollte vorzugsweise alle Kanäle zwischen 0 und 4095 entsprechend 0xA000 in CB) unterstützen und auch unabhängig vom Cell-Broadcastdienst arbeiten können. In dem Client können vorzugsweise mindestens 150 Informationen gespeichert werden und diese werden vorzugsweise nach der FIFO (First in first out) Methode abgearbeitet, was bedeutet, das die zuerst empfangene Information auch als erstes wieder aus dem Speicher gelöscht wird. Vorzugsweise werden von dem Client zumindest 128 gleichzeitige Kanäle unterstützt.

Mit der vorliegenden Erfindung wird es möglich eine UDP-Push-Kommunikation nur dann zu initiieren, wenn diese tatsächlich notwendig ist und diese dann so lange wie möglich aufrecht zu erhalten, ohne andere auf dem mobilen Endgerät ausgeführte Anwendungen zu beeinträchtigen und zudem das Umschalten des mobilen Endgerätes in einen Ruhezustand zu ermöglichen, wodurch die Lebensdauer der Batterie erhöht wird.

## Patentansprüche

1. Verfahren zur Übermittlung von Informationen von einem Informationsserver über einen paketvermittelten Dienst eines Mobilfunknetzes zu einem mobilen Endgerät, **dadurch gekennzeichnet, dass** die Übermittlung zumindest zeitweise entsprechend einem IP-Protokoll erfolgt und das Verfahren zumindest den Schritt des Empfangs einer Anmeldungsanfrage an dem Informationsserver und Übermittlung von auf dem Informationsserver gespeicherten Informationen an das mobile Endgerät umfasst.

2. Verfahren nach Anspruch 1, **dadurch gekennzeichnet, dass** dieses den Schritt des Extrahierens einer Angabe über die zuletzt auf dem mobilen Endgerät empfangene Information aus der Anmeldungsanfrage, des Vergleiches der zuletzt an dem mobilen Endgerät empfangenen Information mit den auf dem Informationsserver gespeicherten Informationen und der Übermittlung der nach der letzten auf dem mobilen Endgerät empfangenen Information gespeicherten Informationen an das mobile Endgerät umfasst.

3. Verfahren nach einem der Ansprüche 1 und 2, **dadurch gekennzeichnet, dass** dieses den Schritt des Extrahierens mindestens einer Angabe von Informationskanälen aus der Anmeldeanfrage umfasst.

4. Verfahren nach Anspruch 3, **dadurch gekennzeichnet, dass** dieses den Schritt des Extrahierens einer Angabe über die zuletzt auf dem mobilen Endgerät empfangene Information in mindestens einem in der Anmeldeanfrage enthaltenen Informationskanäle, aus der Anmeldungsanfrage, des Vergleiches der in diesem Informationskanal zuletzt an dem mobilen Endgerät empfangenen Information mit den auf dem Informationsserver gespeicherten Informationen und der Übermittlung der nach der letzten auf dem mobilen Endgerät empfangenen Information in diesem Informationskanal gespeicherten Informationen an das mobile Endgerät umfasst.

5. Verfahren nach einem der Ansprüche 2 oder 4, **dadurch gekennzeichnet, dass** dieses den Schritt des Feststellen der Übermittlung aller der in dem Vergleich ermittelten Informationen, die auf dem Informationsserver gespeichert sind aber noch nicht an dem mobilen Endgerät empfangen wurden, an das mobile Endgerät, des Erzeugens einer Endnachricht und der Übermittlung der Endnachricht an das mobile Endgerät umfasst, wobei optional nach der Übermittlung der Endnachricht neue auf dem Informationsserver erzeugte Informationen an das mobile Endgerät übermittelt werden.

6. Verfahren nach einem der Ansprüche 1 bis 4, **dadurch gekennzeichnet, dass** dieses den Schritt des Empfangs einer Abmeldeanfrage von dem mobilen Endgerät und den Schritt des Abmeldens des mobilen Endgerätes umfasst.

7. Verfahren nach einem der Ansprüche 1 bis 6, **dadurch gekennzeichnet, dass** dieses die Übermittlung von Informationen mittels Cell Broadcast an mindestens zwei mobile Endgeräte umfasst und/oder dass die Übermittlung der Informationen entsprechend dem IP-Protokoll mittels einer Point-to-Point-, einer Multicast- oder Broadcast-Übermittlung erfolgt.

8. Informationsserver für ein Mobilfunknetz, **dadurch gekennzeichnet, dass** dieser zumindest eine Empfangseinheit aufweist, die zumindest für den Empfang von Anfragen, die gemäß dem IP-Protokoll übermittelt wurden, und zumindest eine Verarbeitungseinheit zur Verarbeitung der mindestens einen empfangenen Anfrage.

9. Informationsserver nach Anspruch 8, **dadurch gekennzeichnet, dass** die Verarbeitungseinheit eine Extraktionseinheit zum Extrahieren von Angaben aus den empfangenen Anfragen umfasst.

10. Informationsserver nach einem der Ansprüche 8 oder 9, **dadurch gekennzeichnet, dass** dieser eine Nachrichtenerstellungseinheit zum Erstellen mindestens einer Nachricht und mindestens eine Ausgabeeinheit zur Übermittlung von Nachrichten an ein mobiles Endgerät umfasst, wobei der Informationsserver optional eine Speichereinheit zur Speicherung von Informationen umfasst und die Nachrichtenerstellungseinheit zumindest zeitweise mit der Speichereinheit verbunden ist und wobei der Informationsserver weiterhin optional eine Vergleichseinheit zum Vergleich empfangener Informationen mit auf dem Server gespeicherten Informationen aufweist und die Vergleichseinheit zumindest zeitweise mit der Speichereinheit des Informationsservers verbunden ist.

11. Informationsserver nach Anspruch 10, **dadurch gekennzeichnet, dass** die Ausgabeeinheit zur Übermittlung von Cell-Broadcast-Nachrichten und zur Übermittlung von Datenpakten gemäß einem IP-Protokoll ausgelegt ist und optional einen Zuschaltmechanismus aufweist, durch den zu der Übermittlung von Cell-Broadcast-Nachrichten die Übermittlung von Datenpaketen gemäß dem IP-Protokoll zugeschaltet werden kann.

12. Kommunikationsprotokoll zur Übermittlung von Informationen mittels Datenpaketen entsprechend einem IP-Protokoll, **dadurch gekennzeichnet, dass** die Datenpakete nach dem User Datagramm Protokoll UDP übermittelt werden und zur Einleitung der Datenübermittlung zumindest eine Anmeldungsanfrage vorgesehen ist, die von einem mobilen Endgerät an einen Informationsserver gesendet wird und die zumindest eine Angabe über den Empfangszeitpunkt der zuletzt an dem mobilen Endgerät empfangenen Information enthält.

13. Kommunikationsprotokoll nach Anspruch 12, **dadurch gekennzeichnet, dass** die Anmeldungsanfrage zumindest eine Angabe über die von dem mobilen Endgerät zu empfangenden Informationen enthält, vorzugsweise zumindest eine Angabe über einen Übermittlungskanal umfasst.

14. Kommunikationsprotokoll nach einem der Ansprüche 12 oder 13, **dadurch gekennzeichnet, dass** der Informationsserver bei Erhalt der Anmeldeanfrage Informationen, die auf dem Informationsserver gespeichert sind, in Abhängigkeit der Angabe der zuletzt an dem mobilen Endgerät empfangenen Information, an das mobile Endgerät übermittelt.

15. Kommunikationsprotokoll nach einem der Ansprüche 12 bis 14, **dadurch gekennzeichnet, dass** eine Endnachricht von dem Informationsserver an das mobile Endgerät gesandt wird, wenn keine neuen Informationen auf dem Informationsserver vorliegen und/oder dass der Informationsserver bei Erzeugen einer neuen Information diese an das mindestens eine mobile Endgerät sendet und/oder dass das mobile Endgerät durch Senden einer Abmeldungsnachricht an dem Informationsserver abgemeldet wird.

16. Kommunikationsprotokoll nach einem der Ansprüche 12 bis 15, **dadurch gekennzeichnet, dass** für die Kommunikation zwischen dem Informationsserver und dem mindestens einen mobilen Endgerät vier Arten von Nachrichten verwendet werden, wobei optional eine Nachrichtenart eine Mitteilung, eine Nachrichtenart eine Anmeldungsanfrage eine Nachrichtenart eine Abmeldungsanfrage und eine Nachrichtenart eine Informationsübermittlung darstellt und weiterhin optional die unterschiedlichen Nachrichtenarten durch eine Angabe in der Startzeile der Nachricht identifiziert werden.

17. Mobiles Endgerät für die Verwendung in einem Mobilfunknetz, das für den Empfang und die Übermittlung von Datenpakten über ein IP-Protokoll ausgelegt ist, **dadurch gekennzeichnet, dass** das Endgerät eine Verwaltungseinheit aufweist, die für den Empfang von Informationen über zumindest zwei unterschiedliche Übermittlungsarten ausgelegt ist.

18. Mobiles Endgerät nach Anspruch 17, **dadurch gekennzeichnet, dass** die Verwaltungseinheit zur Speicherung und Anzeige von empfangenen Informationen ausgelegt ist und/oder dass die Verwaltungseinheit über die Übermittlungsart zwischen dem Informationsserver und dem mobilen Endgerät entscheidet und/oder dass die Verwaltungseinheit zur Überwachung des Empfangs von Informationen ausgelegt ist und/oder zur Überwachung des Betriebszustandes des mobilen Endgerätes ausgelegt ist und/oder zur Erzeugung von Nachrichten ausgelegt ist.

19. Verfahren zum Verwalten von Informationen auf einem mobilen Endgerät eines Mobilfunknetzes, **dadurch gekennzeichnet, dass** dieses den Schritt des Erstellens einer Nachricht zur Übermittlung an einen Informationsserver umfasst.

20. Verfahren nach Anspruch 19, **dadurch gekennzeichnet, dass** dieses den Schritt des Ermittelns von auf dem mobilen Endgerät gespeicherten Daten umfasst.

21. Verfahren nach einem der Ansprüche 19 oder 20, **dadurch gekennzeichnet, dass** dieses den Schritt des Überwachens mindestens eines Übermittlungskanals, der zur Übermittlung von Informationen von einem Informationsserver dient, umfasst, wobei optional bei Erkennen des Ausbleibens von Informationen in dem mindestens einen Übermittlungskanal das Verfahren den Schritt des Erstellens einer Anmeldenachricht zur Übermittlung an einen Informationsserver umfasst.

22. Verfahren nach einem der Ansprüche 19 bis 21, **dadurch gekennzeichnet, dass** dieses den Schritt des Überwachens des Betriebszustandes des mobilen Endgerätes umfasst, wobei das Verfahren optional bei Erkennen des Wechsels des Betriebszustandes des mobilen Endgerätes den Schritt des Erstellens und Obermittelns einer Abmeldungsnachricht an einen Informationsserver umfasst.
